# EUROPEAN PATENT SPECIFICATION

(11) **EP 1 872 300 B1**
(45) Date of publication and mention of the grant of the patent: **17.11.2010**
(21) Application number: 06743322.7
(22) Date of filing: 18.04.2006
(51) Int. Cl.: G06K 7/08, B60R 21/00

(54) **RFID TRANSCEIVER UNIT**
RFID-TRANSCEIVER-EINHEIT
UNITE D'EMISSION/RECEPTION D'IDENTIFICATION PAR RADIOFREQUENCE

(30) Priority: 18.04.2005 EP 05103057
(43) Date of publication of application: 02.01.2008
(73) Proprietor: IEE INTERNATIONAL ELECTRONICS & ENGINEERING S.A., 6468 Echternach (LU)
(72) Inventor: VIRNICH, Michael, 54317 Korlingen (DE); LAMESCH, Laurent, L-4881 Lamadelaine (LU)
(74) Representative: Office Freylinger
(86) International application number: PCT/EP2006/061641
(87) International publication number: WO 2006/111528

(56) References cited:
- EP-A- 0 257 688
- EP-A- 0 645 840
- EP-A- 0 663 657
- EP-A- 0 766 200
- EP-A- 1 467 435
- US-A- 5 321 412
- US-A- 5 618 056

## Description

The present invention concerns a radio-frequency identification (RFID) transceiver unit, in particular an inductive transceiver unit used e.g. in a child seat detection device.

### Background of the Invention

RFID systems are known systems, which allow objects labelled with an RFID tag (or RFID transponder) to be identified when the tag is located in the detection range of an RFID transceiver unit.

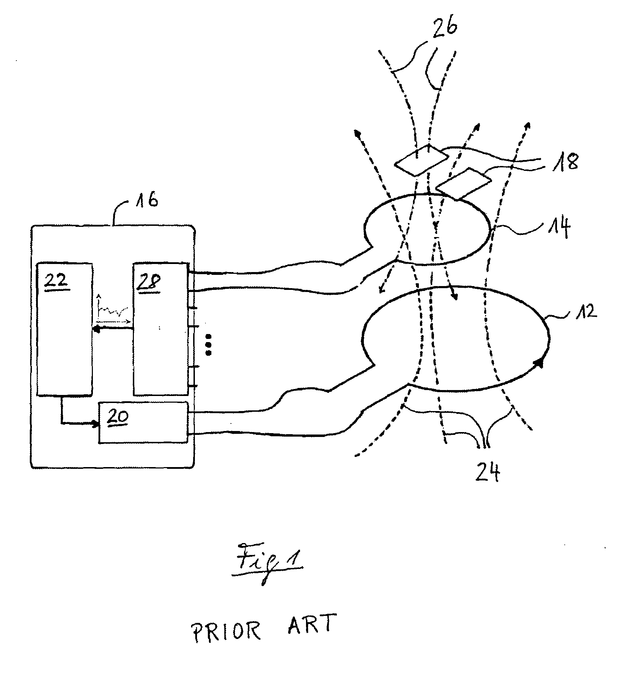

Such a known RFID system is shown in Fig. 1. The system comprises a transmitting (TX) antenna 12 and one or more receiving (RX) antennas 14 (only one is shown for clarity reasons). The antennas 12, 14 are realised as magnetic coils and are connected to an electronics module 16.

One ore more RFID devices 18, usually called tag, transponder or resonator, shall be detected when they are placed in the detection range of the system. To achieve this, the transmitter 20 drives, controlled by the control unit 22, a substantially sinusoidal current through the transmitting antenna 12 or applies a substantially sinusoidal voltage to the antenna 12. The flowing current I_{TX} generates an electromagnetic field 24, respectively a magnetic flux, which supplies the RFID devices 18 with energy. They, themselves, start to generate a magnetic flux 26 (or response field), by which their specific information is transmitted. A part of this flux 26, in the following called Φ_{TRANS-RX}, floods the one or more receiving antennas 14 and induces voltages in these coils. The receiver 28 decodes the data transmitted from the RFID devices 18, thereby enabling the RFID devices 18 or the objects to which they are attached to be identified.

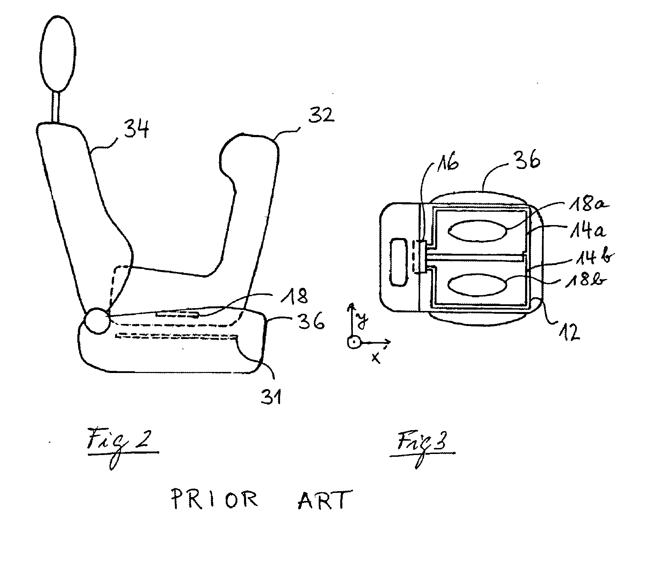

An application for RFID systems is child seat presence and orientation detection on a seat of a vehicle. As shown in Fig. 2 and Fig. 3, a traditional RFID transceiver unit for detecting a child seat 32 on a passenger seat 34 in a car is usually arranged in the seating portion 36 of the passenger seat 34. The child seat is equipped with two RFID transponders 18. One transponder 18a is assembled into the child seat's left side; the other transponder 18b is assembled into the child seat's right side. The passenger seat 34 is equipped with a child seat presence and orientation detector 31 comprising the transmitting antenna 12, a left receiving antenna 14a and a right receiving antenna 14b and an electronics module 16. In order to ensure a sufficient detection in x- and y-direction, the transmitting antenna 12 and the receiving antennas 14 cover most of the sitting area 36 of the seat 34. This leads to small distances between the receiving antennas 14 and the transmitting antenna 12, resulting in a high coupling between the transmitting and receiving antennas.

Another RFID transceiver unit is disclosed in Document EP 1 467 435 A1. This document discloses an antenna assembly comprising a transmitting antenna and a receiving antenna, wherein the transmitting antenna has several loops, which are twisted by 180 degrees one with respect to the other so that the orientation of neighbouring loops is opposite. The receiving antenna and the transmitting antenna are configured in such a way that the amounts of magnetic fluxes caused by the different loops of the transmitting antenna through the receiving antenna cancel each other. The claims are delimited against this document.

Regarding signal reception of RFID transceiver units, there is room for further improvements, as they suffer from relatively poor sensitivity.

### Summary of the Invention

It is an object of the present invention to provide an improved RFID transceiver unit. This is achieved by an RFID transceiver unit as claimed in claim 1.

An RFID transceiver unit for detecting an RFID transponder comprises a transmitter associated with a loop-shaped transmitting antenna for transmitting an electromagnetic excitation field and a receiver associated with a loop-shaped receiving antenna. When the RFID transponder is excited by the excitation field, the RFID transponder emits an electromagnetic response field, which induces a transponder signal in the receiving antenna. The received signal generated by the receiving antenna in response to an electromagnetic field thus contains the transponder signal. The received signal of the receiving antenna generally contains an interfering signal directly induced by the excitation field in the receiving antenna. According to an important aspect of the invention, the transceiver unit comprises means for attenuating the interfering signal in the received signal.

The total received signal comprises the transponder signal and the interfering signal. By attenuating the interfering signal, one increases the relative weight of the transponder signal, which results in an improved signal-to-noise ratio and increased sensitivity. A more reliable detection and decoding of transponder information can be achieved. With the dimensions of common transceivers, the transceiver units according to the present invention achieve increased detection ranges. The invention further enables the reduction of system dimensions without loss of performance with regard to conventional RFID systems.

According to the present invention, the means for attenuating the interfering signal in the received signal comprises an electric compensation circuit operatively connected between the transmitting antenna and the receiving antenna. The electric compensation circuit generates a compensation signal related to the excitation field of the transmitting antenna and combines the compensation signal with the received signal so as to attenuate the interfering signal in the received signal.

The excitation signal generated by the transmitter in the transmitting antenna for transmitting the excitation field can be fed as input signal to the electric circuit. The electric circuit then comprises a phase shifter to shift the phase of the compensation signal with respect to the phase the excitation signal. The electric circuit preferably comprises means for adjusting also the amplitude of the compensation signal.

The phase shifter can be executed as a circuit with a capacitor, while the means for adjusting the amplitude can e.g. comprise a multiplier, an attenuator, an amplifier or a resistor. Said means is preferably capable of dynamically adjusting the amplitude, based e.g. on the transponder signal, the received signal and/or the interfering signal.

The electric circuit can comprise an adder for combining the compensation signal and the received signal by summing.

As will be appreciated, the electric circuit can comprise an analog circuit and/or a digital circuit, which has means for digitising the received signal. In the latter case, software can be used to combine the compensation signal with the digitised received signal.

In a further embodiment of the invention, the means for attenuating the interfering signal in the received signal further comprises one of the receiving loop antenna or transmitting loop antenna being twisted so as to present at least a main loop and a secondary loop, the main and secondary loops having opposite orientations. The antenna loops may comprise several windings. The secondary loop may lie in a plane above, beneath or in the plane of the main loop, while extending outwardly from the region enclosed by the main loop.

The transponder signal is due to the magnetic flux Φ_{TRANS-RX}, while the transmitting antenna generates a flux Φ_{TX-RX} in the loop of the receiving antenna giving rise to the interfering signal. By partially flipping the winding orientation of the receiving antenna, the latter comprises a main loop and a secondary loop. The signal due to the magnetic flux generated by the transmitting antenna through the main loop is partially compensated by the magnetic flux generated by the transmitting antenna through the secondary loop. The resulting interfering signal is thereby attenuated.

The transponder is preferentially arranged in a region substantially above the main loop, which defines a sensitive region for detection of the response field, while the secondary loop extends laterally outwards from the main loop.

Such an RFID transceiver can be used in a child seat detection device for a vehicle seat. In this case, the transmitting antenna and the receiving antenna are associated with or integrated into the vehicle seat. The transmitting antenna or the receiving antenna(s) can be twisted. Preferentially, the child seat detector comprises two receiving antennas, each of which is twisted so as to present at least a main loop and a secondary loop. The secondary antenna loop may be arranged in the connection terminal or connection structure of the receiving antennas. The connection terminal extends outwardly from the main loop for connection to the controller.

### Brief Description of the Drawings

Preferred embodiments of the invention will now be described with reference to the accompanying drawings in which:
- Fig. 1:: is a schematic view of a prior art RFID system;
- Fig. 2:: is a schematic view of a conventional child seat detection system;
- Fig. 3:: is a top view of the electronic components of the conventional child seat detection system of Fig. 2;
- Fig. 4:: is a schematic view of an RFID system with a first embodiment of a transceiver according to the invention;
- Fig. 5:: is a schematic view of a variant of the RFID system shown in Fig. 4.
- Fig. 6:: is a top view of an RFID transceiver of a child seat detection system with flipped receiving antennas;
- Fig. 7:: is a schematic view of an RFID system with a second embodiment of a transceiver according to the invention;
- Fig. 8:: is a schematic view of a variant of the RFID system shown in Fig. 7.
- Fig. 9:: is a top view of an RFID transceiver of a child seat detection system with a flipped transmitting antenna;
- Fig. 10:: is a block diagram of a first electric circuit of an RFID transceiver unit;
- Fig. 11:: is a block diagram of a second electric circuit of an RFID transceiver unit;
- Fig. 12:: is a block diagram of a third electric circuit of an RFID transceiver unit.

### Description of preferred embodiments

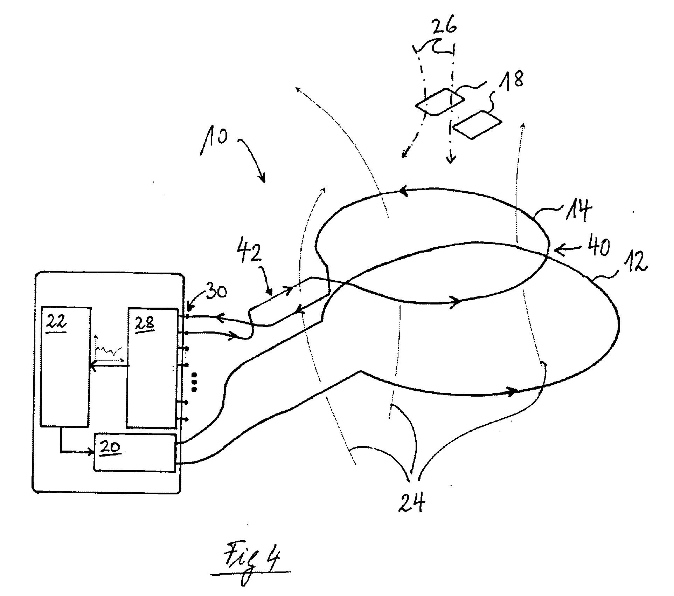

Referring to Fig. 4, an RFID transceiver unit 10 comprises a transmitting antenna 12, which generates an electromagnetic excitation field 24. The electromagnetic excitation field 24 couples to the RFID transponders 18, inducing a current within the resonant circuits of the latter, which supplies them with energy.

The transmitting antenna 12 has substantially the aspect of a plane loop and the RFID transponders 18 are operatively located at a certain distance from the loop plane vertically above the loop. Loop-shaped receiving antennas 14 (only one is shown) are arranged in planes, which are substantially parallely arranged above, beneath or in the plane defined by the loop of the transmitting antenna 12. The transmitting antenna 12 is connected to a transmitter 20, which provides the excitation signal causing the excitation field, while the receiving antennas are connected to a receiver 28 via the terminals 30.

In response to the excitation field 24, the RFID transponders 18 emit a response field 26, which may contain encoded data, e.g. a pseudo-random binary sequence. The receiving antennas 14 capture the response field 26 together with a part of the excitation field 24. The signal generated in the receiving antennas 14 can be understood as a superposition of a transponder signal induced by the sole response field 26 and an interfering signal induced by the sole excitation field 24.

By partially flipping the winding orientation of the receiving antennas 14 with respect to the orientation of the excitation field 24, each receiving antenna forms a main loop 40 and a secondary loop 42, which is located outside the main loop 40, where its coupling to the transponders is negligible. The main loop 40 detects the transponders 18 and the secondary loop 42 compensates parts of the magnetic excitation flux of the excitation field 24 flooding the main loop 40. Because the orientation of the secondary loop 42 is inverted with respect to the main loop, the current or voltage induced by the excitation field 24 in the secondary loop 42 is of opposite sign compared to the voltage induced by the excitation field 24 in the main loop 40. The signal induced by the excitation field 24 in the secondary loop 42 thus partially cancels the signal induced by the excitation field 24 in the main loop 40. As a result, the overall interfering signal is reduced in comparison to an RFID transceiver unit of same dimensions without the twisted receiving antennas 14. The response field 26 induces a voltage or current mainly in the main loop 40 and the response signal is thus not attenuated as much as the interfering signal. Therefore, the ratio of transponder signal to interfering signal is larger, which makes the system more sensitive and increases the recognition distance of the transponder.

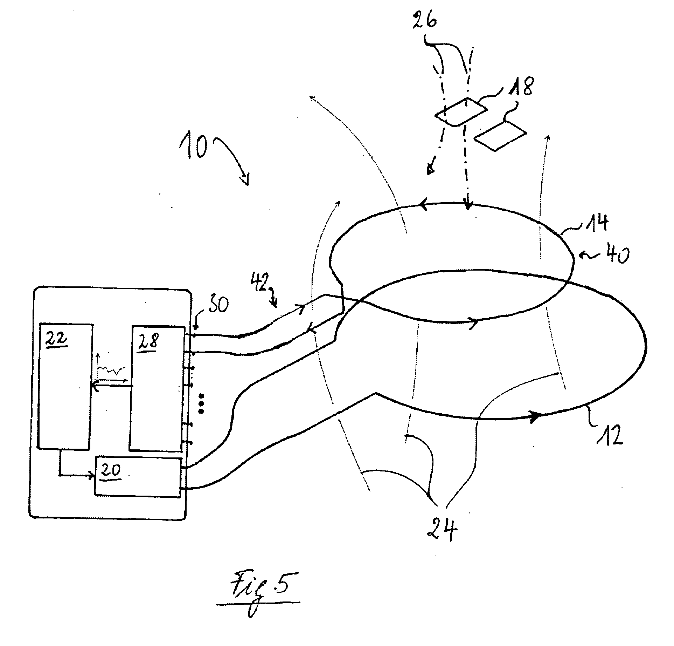

A similar embodiment is shown in Fig. 5. Here, the loop-shaped receiving antenna 14 is flipped only once so that the secondary loop 42 extends to the terminals 30 of the receiver 28. If the antenna is flipped only once, the signal has a 180-degree phase shift compared to the conventional, unflipped antenna. If the transceiver unit is sensitive to such a 180-degree phase shift, the antenna should have a pair number of wire crossings. The configuration of Fig. 5 can be used if the transceiver can accept the additional 180-degree phase shift.

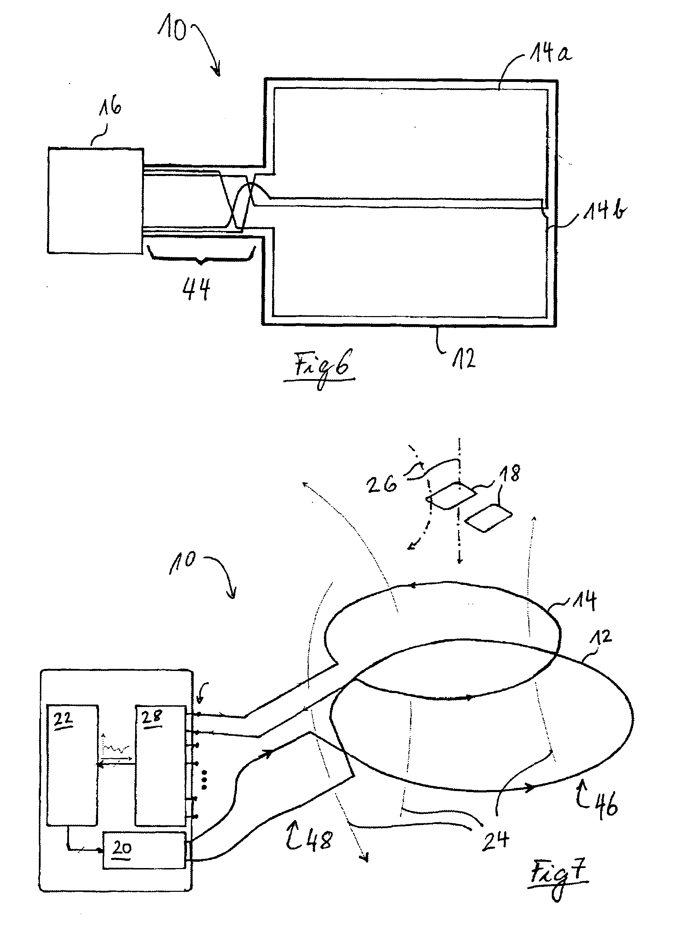

Fig. 6 shows a RFID transceiver unit 10 for a child seat presence and orientation detector. The orientation of the receiving antennas 14a, 14b are both flipped once in the region of the connection terminal 44 ("tail") between the electronics module 16 and the seating portion of the vehicle seat. The receiving antennas 14a, 14b thus form each a main loop and a secondary loop. Each receiving antenna 14a, 14b covers approximately the left respectively the right half seating area of the vehicle seat. When a child seat is placed on the seat, the response fields of its left and right transponders induce individual transponder signals in the main loops of the receiving antennas 14a, 14b, which allows determining the orientation the child seat. The distance of the transponders from the plane of the receiving antennas ranges typically from a few centimetres to a few tens of centimetres. The secondary loops are arranged outside the main loops, thus more distant from the RFID transponders, which results in insignificant coupling of the RFID transponders to the secondary loops. On the other hand, the secondary loops of the receiving antennas 14a, 14b partially compensate the magnetic coupling between the receiving antennas 14a, 14b and the transmitting antenna 12, which extends peripherally around the receiving antennas 14a, 14b. Without the compensation windings, a long connection structure 44 would increase the magnetic coupling factor, leading to a loss of sensitivity. By using these compensation windings, the cable connections can be used to improve the performance of the RFID system, and longer cables can be used.

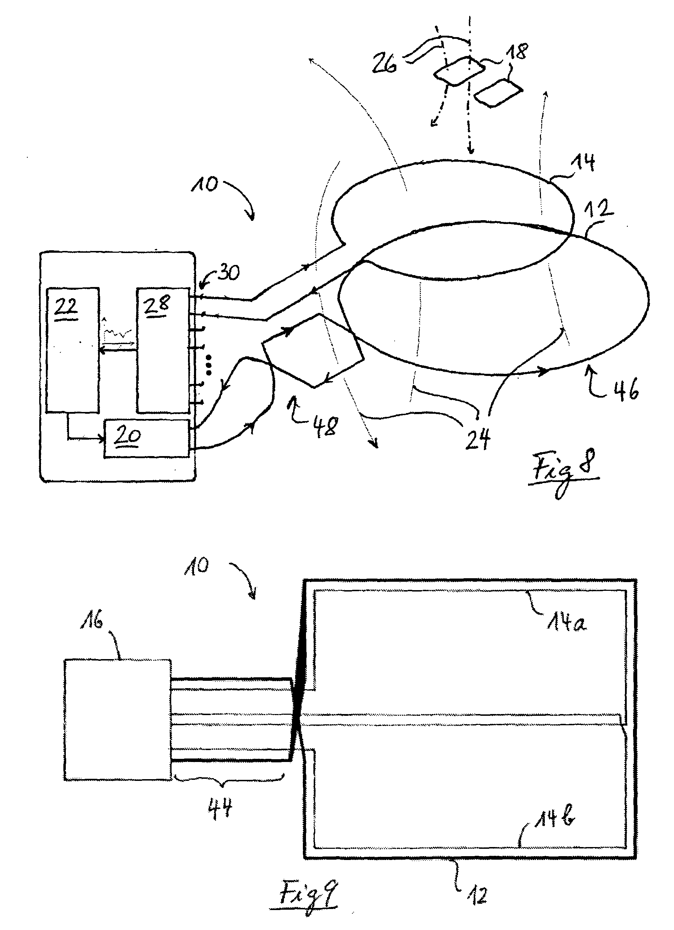

Figs. 7 and 8 show an RFID transceiver unit 10, wherein the transmitting antenna 12 comprises a main loop 46 and a secondary loop 48, which is 180-degrees flipped with respect to the main loop. The RFID transponders 18 are operatively located at a certain distance from the plane of the transmitting antenna 12 vertically above the main loop 46. Loop-shaped receiving antennas 14 (only one is shown) are arranged above, beneath or in the plane defined by the loop of the transmitting antenna 12. The transmitting antenna 12 is connected to a transmitter 20, which provides the excitation signal causing the excitation field, while the receiving antennas are connected to a receiver 28 via the terminals 30. The part of the excitation field 24, which is caused by the secondary loop 48 is oriented in substantially opposite direction with respect to the part of the excitation field caused by the main loop 46. As the transponders 18 are primarily excited by the latter part of the excitation field, their response field 26 is not significantly different from the response field they would emit if the transmitting antenna were not flipped. In contrast, the part of the excitation field caused by the secondary loop 48 induces a voltage in the receiving antenna 14, partially cancels the voltage induced by direct coupling of the main loop 46 to the receiving antenna. The total signal induced by the transmitting antenna 12 in the receiving antenna if therefore attenuated with respect to the case, where no antenna is flipped.

In Fig. 7, the secondary loop 48 extends to the connection terminals of the transmitting antenna 12, whereas in Fig. 8, the secondary loop 48 is totally outside the electronics module 16.

An RFID transceiver unit 10 for a child seat presence and orientation detector with a flipped transmitting antenna 12 is shown in Fig. 9. In the region of the connection terminal 44 ("tail") between the electronics module 16 and the seating portion of the vehicle seat, the transmitting antenna 12 comprises a secondary loop, which is oppositely oriented compared to the main loop of the transmitting antenna in the seating portion of the vehicle seat. The coupling between the transmitting and the receiving antennas in the tail 44 causes signals in the receiving antennas 14a, 14b that attenuate the signals induced in the receiving antennas 14a, 14b at the level of the seating portion of the seat.

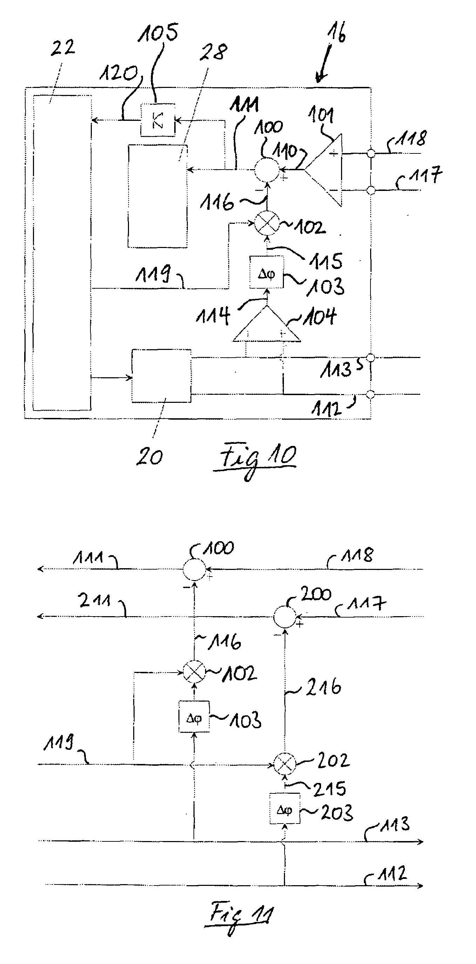

Embodiments, wherein the interfering signal is electronically attenuated are now discussed with reference to Figs. 10 - 12.

The block diagram of Fig. 10 depicts an electric circuit of the electronics module 16 for correcting the received signal, which is present in form of a differential voltage between the wires 117 and 118. The differential voltage between wires 118 and 117 originating from a receiving antenna is converted from a differential signal to a single-ended signal 110 by difference amplifier 101. The voltage U₁₁₀ at the output of the difference amplifier 101 is the difference between the voltage U₁₁₈ at wire 118 and the voltage U₁₁₇ at wire 117: U₁₁₀ = U₁₁₈ - U₁₁₇. The subtractor 100 subtracts a compensation signal 116 that is substantially in phase with the interfering signal part of received signal 110 and produces the single-ended signal 111.

Difference amplifier 104 converts the excitation signal having the form of a differential voltage between wires 112 and 113 and driving the transmitting antenna to a single-ended input signal 114: U₁₁₄ = U₁₁₃ - U₁₁₂. Input signal 114 is then phase-shifted by phase shifter 103. The phase shift is chosen so that the phase shift between signal 115 and the interfering signal part of received signal 110 is substantially zero. The phase-shifted signal 115, having a voltage equal to the voltage difference between the transmitting wires, is then attenuated by multiplier 102. The second input of the amplifier 102 is a signal 119 of either constant voltage, or its voltage is adjustable by control unit 22. Therefore, the compensation signal 116 at the output of the multiplier 102, which is at the same time an input signal to the subtractor 100, is a phase-shifted version of the voltage difference between the transmitting wires 113 and 112. Its amplitude is attenuated, with the attenuation being adjustable or fixed. The phase difference between signals 116 and the interfering signal as part of received signal 110 is close to zero.

The output 111 of subtractor 100 is then used to drive the input of receiver 28. If required (e.g. if the receiver 28 only accepts differential signals), the single-ended signal 111 can be reconverted to a differential signal by using an inverting amplifier.

As shown in Fig. 11, the idea is also applicable if the differential received signals 117 and 118, and transmitting signals 112 and 113 are not first converted into single-ended signals and then, if necessary, reconverted to a differential signal.

Phase shifter 203 has substantially the same phase shift than phase shifter 103. Multiplier 202 is substantially equal to multiplier 102 and is controlled by the same control signal 119. As signals 112 and 113 are inverted, the signals 116 and 216 are also inverted with respect to each other. Subtractors 200 and 100 are also substantially equal, so that output signals 111 and 211, which drive the input of the receiver, are also substantially equal, except that they are inverted respectively to each other. As a result, the voltages 112 and 113 are used as input signals for the compensation circuit, wherein they are phase-shifted to approximately the same extend and attenuated similarly. The resulting signals 116 and 216 are subtracted from the voltage 118 respectively the voltage 117 to compensate at least partially the directly induced voltage of the excitation field in the receiving antenna.

The voltage difference U_{RX} between wires 117 and 118 of the receiving antenna is composed of a voltage U_{TRANS-RX} resulting from flux Φ_{TRANS-RX} and a voltage U_{TX-RX} resulting from flux Φ_{TX-RX}: U_{RX} = U_{TX-RX} + U_{TRANS-RX}· U_{TX-RX} is proportional to Φ_{TX-RX} and U_{TRANS-RX} is proportional to Φ_{TRANS-RX} by substantially the same factor. In voltage U_{RX}, the U_{TX-RX} part can be adapted in favour of U_{TRANS-RX}, so that the same effect is obtained as by adapting Φ_{TX-RX} in favour of Φ_{TRANS-RX} . This is achieved with the electric circuits shown in Fig. 10 and Fig. 11, wherein a voltage proportional to U_{TX-RX} is subtracted from the receiving antenna voltage U_{RX}.

The subtracted amount can be variable and adapted so that the U_{TX-RX} part of the voltage U_{RX} is optimally attenuated. To achieve this, the control unit 22 searches for the optimum control voltage 119 of multiplier 102 by setting it to different values. After setting of each value, the output amplitude of receiver 28 is measured. Each output amplitude is stored in control unit 22, and after having stepped through the different control voltage values, the control unit 22 selects that value, which has produced the highest amplitude at the output of receiver 28. The control voltage 119 is then set to this value. Such a search for the optimum value for control voltage 119 can be performed at the end of the production of the transceiver unit, or it can be performed online during the lifetime of the RFID system.

For optimal operation, the amplitude of receiver input signal 111 can be measured using a rectifier 105. This rectifier preferably is a synchronous rectifier, steered by a signal derived from transmitter output 112 or 113. Different rectifiers, for example a peak or average value detector can also be used. The control unit 22 then measures the output of rectifier 105 and sets the control voltage 119 such that the output of the rectifier 105 does not underrun a minimum threshold while the output amplitude of receiver input signal 111 is maximised.

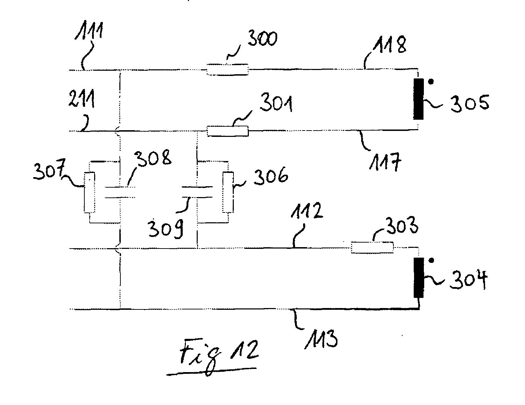

A less complex example of an electric circuit for compensating the direct coupling of the excitation field to the receiving antenna is shown by the equivalent circuit diagram of Fig. 12. Coil 304 represents the inductance of the transmitting antenna and resistor 303 represents the resistance of the transmitting antenna, while coil 305 represents the inductance of the receiving antenna. There is a certain magnetic coupling between the coils 304, 305. The relative orientation of the coils is indicated by the dots next to the coils 304, 305. The resistors 300, 301, 306, 307, together with the capacitors 308, 309 form a phase-shifting, attenuating network, which attenuates the amplitude of the differential signal between transmitting coil voltages 112, 113 and at the same time shifts the phase of said differential signal. The attenuating network adds the so obtained attenuated and phase shifted signal to the differential signal between receiving coil voltages 117, 118. The signals 111, 211 resulting from this addition are sent to the receiver inputs. In this example, the resistances of resistors 300 and 301 are substantially equal, the resistances of resistors 306 and 307 are substantially equal and the capacitance of capacitors 308 and 309 are substantially equal. The attenuation factor is mainly given by the relation between the resistance of resistor 301 and the impedance of the paralleled resistor 306 and capacitor 309, respectively by the relation between the resistance of resistor 300 and the impedance of the paralleled resistor 307 and capacitor 308. The phase shift is mainly determined by the relation between capacitor 309 and resistors 306 and 301, respectively by the relation between capacitor 308 and resistors 307 and 300. The required phase shift is mainly determined by the relation between transmitting coil resistance 303 and inductance 304.

The skilled person will appreciate that, instead of the parallel arrangement of the resistor 306 and capacitor 309 resp. resistor 307 and capacitor 308, the phase-shifting, attenuating network could also comprise a series arrangement of resistor 306 and capacitor 309 resp. resistor 307 and capacitor 308.

## Claims

1. An RFID transceiver unit (10) for detecting an RFID transponder (18) said transceiver unit (10) comprising:
a transmitter (20) associated with a loop-shaped transmitting antenna (12) for transmitting an electromagnetic excitation field (24);
a receiver (28) associated with a loop-shaped receiving antenna (14, 14a, 14b), said receiving antenna (14, 14a, 14b) for generating a received signal containing a transponder signal and an interfering signal, said transponder signal being induced by an electromagnetic response field (26) emitted by said RFID transponder (18) in response to said excitation field (24) and said interfering signal being directly induced by said excitation field (24) in said receiving antenna (14, 14a, 14b);
**characterized by**
an electric compensation circuit operatively connected between said transmitting antenna (12) and said receiving antenna (14, 14a, 14b), said compensation circuit generating a compensation signal (116, 216) related to said electromagnetic excitation field (24) of said transmitting antenna (12) and combining said compensation signal (116, 216) with said received signal (110) so as to attenuate said interfering signal in said received signal.

2. An RFID transceiver unit (10) according to claim 1, wherein said transmitter (20) generates an excitation signal in said transmitting antenna (12) for transmitting said excitation field (24), said excitation signal being fed as input signal to said electric compensation circuit and wherein said electric compensation circuit comprises a phase shifter (103, 203) so that a phase of said compensation signal (116, 216) is shifted with respect to a phase said excitation signal.

3. An RFID transceiver unit (10) according to claim 1 or 2, wherein said electric circuit comprises means (102, 202) for adjusting an amplitude of said compensation signal (116, 216).

4. An RFID transceiver unit (10) according to claim 3, wherein said means for adjusting an amplitude of said compensation signal (116, 216) is capable of dynamically adjusting said amplitude.

5. An RFID transceiver unit (10) according to any one of claims 1 to 4, wherein said electric circuit comprises an adder (100, 200) for summing said compensation signal (116, 216) and said received signal.

6. An RFID transceiver unit (10) according to any one of claims 1 to 5, wherein one of said receiving loop antenna (14, 14a, 14b) or transmitting loop antenna (12) is twisted so as to present at least a main loop (40, 46) and a secondary loop (42, 48), said main and secondary loops having opposite orientations.

7. An RFID transceiver unit (10) according to any one of claims 1 to 5, wherein said receivingloop antenna (14) is twisted so as to present at least a main loop (40) and a secondary loop (42), said main and secondary loops having opposite orientations.

8. A child seat detection device for a vehicle seat comprising an RFID transceiver unit (10) according to any one of claims 1 to 7, wherein said transmitting (12) and receiving (14, 14a, 14b) antennas are associated with said vehicle seat.

9. A child seat detection device according to claim 8, with two receiving antennas (14a, 14b), each of said two receiving antennas (14a, 14b) being twisted so as to present at least a main loop (40) and a secondary loop (42).

10. A child seat detection device according to claim 9, wherein the receiving antennas (14a, 14b) have a connection terminal (44) for connection to a controller (16), said connection terminal (44) extending outwardly from said main loop and wherein said secondary antenna loop is arranged in said connection terminal.

## Patentansprüche

1. RFID-Transceiver-Einheit (10) zum Erkennen eines RFID-Transponders (18), wobei die Transceiver-Einheit (10) aufweist:
einen Sender (20), der einer schleifenförmigen Sendeantenne (12) zum Senden eines elektromagnetischen Erregerfeldes (24) zugeordnet ist;
einen Empfänger (28), der einer schleifenförmigen Empfangsantenne (14, 14a, 14b) zugeordnet ist, wobei die Empfangsantenne (14, 14a, 14b) zum Erzeugen eines empfangenen Signals, das ein Transpondersignal und ein Störsignal enthält, dient, wobei das Transpondersignal durch ein elektromagnetisches Ansprechfeld (26) induziert wird, das von dem RFID-Transponder (18) in Reaktion auf das Erregerfeld (24) ausgegeben wird, und das Störsignal unmittelbar durch das Erregerfeld (24) in der Empfangsantenne (14, 14a, 14b) induziert wird;
**gekennzeichnet durch**
eine elektrische Kompensationsschaltung, die zwischen der Sendeantenne (12) und der Empfangsantenne (14, 14a, 14b) wirksam angeschlossen ist, wobei die Kompensationsschaltung ein Kompensationssignal (116, 216) in Bezug auf das elektromagnetische Erregerfeld (24) der Sendeantenne (12) erzeugt und das Kompensationssignal (116, 216) mit dem empfangenen Signal (110) kombiniert, um das Störsignal in dem empfangenen Signal zu dämpfen.

2. RFID-Transceiver-Einheit (10) nach Anspruch 1, wobei der Sender (20) in der Sendeantenne (12) ein Erregersignal zum Übertragen des Erregerfelds (24) erzeugt, wobei das Erregersignal als Eingangssignal in die elektrische Kompensationsschaltung eingegeben wird, und wobei die elektrische Kompensationsschaltung einen Phasenschieber (103, 203) aufweist, so dass eine Phase des Kompensationssignals (116, 216) in Bezug auf eine Phase des Erregersignals verschoben wird.

3. RFID-Transceiver-Einheit (10) nach Anspruch 1 oder 2, wobei die elektrische Schaltung Mittel (102, 202) zum Einstellen einer Amplitude des Kompensationssignals (116, 216) aufweist.

4. RFID-Transceiver-Einheit (10) nach Anspruch 3, wobei die Mittel zum Einstellen einer Amplitude des Kompensationssignals (116, 216) in der Lage sind, die Amplitude dynamisch einzustellen.

5. RFID-Transceiver-Einheit (10) nach einem der Ansprüche 1 bis 4, wobei die elektrische Schaltung ein Addierwerk (100, 200) zum Summieren des Kompensationssignals (116, 216) und des empfangenen Signals aufweist.

6. RFID-Transceiver-Einheit (10) nach einem der Ansprüche 1 bis 5, wobei eine der empfangenden Schleifenantenne (14, 14a, 14b) oder der übertragenden Schleifenantenne (12) verdrillt ist, so dass sie mindestens eine Hauptschleife (40, 46) und eine Sekundärschleife (42, 48) darstellt, wobei die Hauptschleife und die Sekundärschleife entgegengesetzte Ausrichtungen aufweisen.

7. RFID-Transceiver-Einheit (10) nach einem der Ansprüche 1 bis 5, wobei die empfangende Schleifenantenne (14) verdrillt ist, so dass sie mindestens eine Hauptschleife (40) und eine Sekundärschleife (42) darstellt, wobei die Hauptschleife und die Sekundärschleife entgegengesetzte Ausrichtungen aufweisen.

8. Kindersitz-Erkennungsvorrichtung für einen Fahrzeugsitz, aufweisend eine RFID-Transceiver-Einheit (10) nach einem der Ansprüche 1 bis 7, wobei die Sende- (12) und die Empfangsantenne (14, 14a, 14b) dem Fahrzeugsitz zugeordnet sind.

9. Kindersitz-Erkennungsvorrichtung nach Anspruch 8 mit zwei Empfangsantennen (14a, 14b), wobei jede der beiden Empfangsantennen (14a, 14b) verdrillt ist, so dass sie mindestens eine Hauptschleife (40) und eine Sekundärschleife (42) darstellen.

10. Kindersitz-Erkennungsvorrichtung nach Anspruch 9, wobei die Empfangsantennen (14a, 14b) eine Anschlussklemme (44) zur Verbindung mit einem Steuergerät (16) aufweisen, wobei sich die Anschlussklemme (44) von der Hauptschleife nach außen erstreckt, und wobei die Sekundärantennenschleife in der Anschlussklemme angeordnet ist.

## Revendications

1. Unité d'émetteur-récepteur d'IRF (10) pour détecter un transpondeur d'IRF (18), ladite unité d'émetteur-récepteur (10) comprenant :
un émetteur (20) associé avec une antenne de transmission (12) en forme de boucle pour transmettre un champ d'excitation électromagnétique (24) ;
un récepteur (28) associé avec une antenne de réception (14, 14a, 14b) en forme de boucle, ladite antenne de réception (14, 14a, 14b) pour générer un signal reçu contenant un signal de transpondeur et un signal interférant, ledit signal de transpondeur étant induit par un champ de réponse électromagnétique (26) émis par ledit transpondeur d'IRF (18) en réponse audit champ d'excitation (24) et ledit signal interférant étant directement induit par ledit champ d'excitation (24) dans ladite antenne de réception (14, 14a, 14b) ;
**caractérisé par**
un circuit de compensation électrique opérationnellement connecté entre ladite antenne de transmission (12) et ladite antenne de réception (14, 14a, 14b), ledit circuit de compensation générant un signal de compensation (116, 216) se rapportant audit champ d'excitation électromagnétique (24) de ladite antenne de transmission (12) et combinant ledit signal de compensation (116, 216) avec ledit signal reçu (110) de façon à atténuer ledit signal interférant dans ledit signal reçu.

2. Unité d'émetteur-récepteur d'IRF (10) selon la revendication 1, dans laquelle ledit émetteur (20) génère un signal d'excitation dans ladite antenne de transmission (12) pour transmettre ledit champ d'excitation (24), ledit signal d'excitation étant alimenté comme signal d'entrée dans ledit circuit de compensation électrique et dans laquelle ledit circuit de compensation électrique comprend un déphaseur (103, 203) de telle sorte qu'une phase dudit signal de compensation (116, 216) est décalée par rapport à une phase dudit signal d'excitation.

3. Unité d'émetteur-récepteur d'IRF (10) selon la revendication 1 ou 2, dans laquelle ledit circuit électrique comprend un moyen (102, 202) pour ajuster une amplitude dudit signal de compensation (116, 216).

4. Unité d'émetteur-récepteur d'IRF (10) selon la revendication 3, dans laquelle ledit moyen pour ajuster une amplitude dudit signal de compensation (116, 216) est apte à ajuster dynamiquement ladite amplitude.

5. Unité d'émetteur-récepteur d'IRF (10) selon l'une quelconque des revendications 1 à 4, dans laquelle ledit circuit électrique comprend un additionneur (100, 200) pour ajouter ledit signal de compensation (116, 216) et ledit signal reçu.

6. Unité d'émetteur-récepteur d'IRF (10) selon l'une quelconque des revendications 1 à 5, dans laquelle l'une de ladite antenne de réception (14, 14a, 14b) en boucle ou de ladite antenne de transmission (12) en boucle est torsadée de façon à présenter au moins une boucle principale (40, 46) et une boucle secondaire (42, 48), lesdites boucles principale et secondaire ayant des orientations opposées.

7. Unité d'émetteur-récepteur d'IRF (10) selon l'une quelconque des revendications 1 à 5, dans laquelle ladite antenne de réception (14) en boucle est torsadée de façon à présenter au moins une boucle principale (40) et une boucle secondaire (42), lesdites boucles principale et secondaire ayant des orientations opposées.

8. Dispositif de détection de siège pour enfant pour un siège de véhicule comprenant une unité d'émetteur-récepteur d'IRF (10) selon l'une quelconque des revendications 1 à 7, dans lequel lesdites antennes de transmission (12) et de réception (14, 14a, 14b) sont associées avec ledit siège de véhicule.

9. Dispositif de détection de siège pour enfant selon la revendication 8, avec deux antennes de réception (14a, 14b), chacune desdites deux antennes de réception (14a, 14b) étant torsadée de façon à présenter au moins une boucle principale (40) et une boucle secondaire (42).

10. Dispositif de détection de siège pour enfant selon la revendication 9, dans lequel les antennes de réception (14a, 14b) ont une borne de connexion (44) pour une connexion à un contrôleur (16), ladite borne de connexion (44) s'étendant vers l'extérieur à partir de ladite boucle principale et dans lequel ladite boucle secondaire d'antenne est agencée dans ladite borne de connexion.
